# EUROPEAN PATENT APPLICATION

(11) **EP 4 796 514 A1**
(43) Date of publication of application: **26.08.2026**
(21) Application number: 24879830.8
(22) Date of filing: 18.10.2024
(51) Int. Cl.: C04B 35/587

(54) **SILICON NITRIDE-BASED SINTERED BODY AND METHOD FOR PRODUCING SAME**

(30) Priority: 20.10.2023 JP 2023181314
(71) Applicant: Nippon Steel Corporation, Tokyo 100-8071 (JP)
(72) Inventor: NAKABAYASHI, Masashi, Tokyo 100-8071 (JP); NARIKI, Shinya, Tokyo 100-8071 (JP); SATO, Yutaka, Kitakyushu-shi, Fukuoka 806-8586 (JP); ISHITOBI, Keigo, Kitakyushu-shi, Fukuoka 806-8586 (JP); HIRAMATSU, Shingo, Kitakyushu-shi, Fukuoka 806-8586 (JP)
(74) Representative: Vossius & Partner Patentanwälte Rechtsanwälte mbB
(86) International application number: PCT/JP2024/037221
(87) International publication number: WO 2025/084410

(57) **Abstract**

Disclosed is a technique for imparting color tone difference to a silicon nitride sintered body. The silicon nitride sintered body of the disclosure has multiple crystal grains and a grain boundary phase that bonds the crystal grains together, with a brightness difference of 5 or greater as an L* value. The silicon nitride sintered body of the disclosure can be obtained by kneading silicon nitride powder and a secondary starting powder to obtain granules, and then molding the granules and firing them under specified conditions.

## Description

### FIELD

The present application discloses a silicon nitride sintered body and a method for its production.

### BACKGROUND

Silicon nitride sintered bodies are used for various types of structural materials (PTLs 1 to 4). Silicon nitride sintered bodies generally have a uniform color tone of black or dark gray. PTL 5 discloses a silicon nitride sintered body having a boundary region wherein the brightness V in the color display system specified by JIS Z 8721 is reduced by at least 3 on the interior side with respect to the surface side, thus facilitating detection of contaminants, the brightness boundary being at a location within 20% of a depth of 100 to 1000 µm from the sintered body surface, i.e. 80 to 1200 µm. PTL 6 discloses a ceramic ball composed of a composite material of silicon nitride-based materials A and B that are distinguishable using visible light or ultraviolet light, and whose state of rotation can be optically observed.

### [CITATION LIST]

### [PATENT LITERATURE]

[PTL 1] Japanese Unexamined Patent Publication No. 2004-059346
[PTL 2] Japanese Unexamined Patent Publication No. H09-227240
[PTL 3] Japanese Patent Publication No. 5289090
[PTL 4] Japanese Unexamined Patent Publication No. 2003-267786
[PTL 5] International Patent Publication No. WO2014/104112
[PTL 6] Japanese Unexamined Patent Publication No. 2017-172735

### SUMMARY

### [TECHNICAL PROBLEM]

Techniques for color tone uniformization of silicon nitride sintered bodies have been disclosed in the prior art, and techniques for imparting a certain degree of color tone difference to silicon nitride sintered bodies have also been disclosed. However, the prior art still leaves room for improvement in terms of imparting a more distinct difference in brightness to silicon nitride sintered bodies. In light of the above, the present application discloses a silicon nitride sintered body with a more distinct difference in brightness, and a method for producing it.

### [SOLUTION TO PROBLEM]

The technology of the disclosure encompasses the following aspects.

### <Aspect 1>

A silicon nitride sintered body,
having multiple crystal grains and a grain boundary phase that bonds the crystal grains together, and
having a brightness difference of 5 or greater as an L* value.

### <Aspect 2>

The silicon nitride sintered body according to aspect 1,
having a brightness difference of 10 or greater as an L* value.

### <Aspect 3>

The silicon nitride sintered body according to aspect 1 or 2, wherein
the brightness difference is on the surface of the sintered body.

### <Aspect 4>

The silicon nitride sintered body according to any one of aspects 1 to 3, wherein
the brightness difference is in a cross-section perpendicular to the surface of the sintered body.

### <Aspect 5>

The silicon nitride sintered body according to aspect 4, wherein
the brightness difference is in a range of 1.0 mm or less in the direction perpendicular to the surface of the sintered body in a cross-section perpendicular to the surface.

### <Aspect 6>

The silicon nitride sintered body according to aspect 4, wherein
the brightness difference is in a range of 0.5 mm or less in the direction perpendicular to the surface of the sintered body in a cross-section perpendicular to the surface.

### <Aspect 7>

The silicon nitride sintered body according to any one of aspects 1 to 6, wherein
the cross-section of the sintered body contains a section where, when the brightness is measured from the surface of the sintered body toward the interior, two or more uniform brightness regions are observed where the brightness difference is less than 5 as an L* value and the width is 2 mm or greater.

### <Aspect 8>

The silicon nitride sintered body according to any one of aspects 1 to 7,
having a section with an L* value of 55 or greater.

### <Aspect 9>

The silicon nitride sintered body according to any one of aspects 1 to 8, wherein
the total content of Al, Fe, Co and Ni is less than 2000 ppm and
the SiC content is less than 5000 ppm.

### <Aspect 10>

The silicon nitride sintered body according to any one of aspects 1 to 9, wherein
the Al content is less than 1000 ppm.

### <Aspect 11>

The silicon nitride sintered body according to any one of aspects 1 to 10, wherein
the grain boundary phase contains a crystalline component.

### <Aspect 12>

The silicon nitride sintered body according to aspect 11, wherein
the grain boundary phase contains, as the crystalline component, one or more selected from the group consisting of Si₂N₂O, Y₂Si₂O₇, Yb₂Si₂O₇, Y₂Si₃O₃N₄ and YbSi₃O₃N₄.

### <Aspect 13>

A method for producing the silicon nitride sintered body according to any one of aspects 1 to 12, the method comprising:
kneading silicon nitride powder and a secondary starting powder to obtain granules, and
molding and firing the granules,
wherein
the maximum temperature during firing is higher than 1770°C,
the atmosphere at 1700°C or higher during temperature increase in the firing period comprises nitrogen gas at 99.9 vol% or greater and has an absolute pressure of 0.3 MPa or higher and lower than 1.1 MPa,
the time required for temperature increase from 1700°C to 1770°C during the firing period is 40 to 120 minutes,
the time required for temperature increase from 1770°C to the maximum temperature during the firing period is 30 to 90 minutes, and
the holding time at the maximum temperature during the firing period is 16 hours or less.

### [EFFECTS OF INVENTION]

The silicon nitride sintered body of the disclosure has a fixed minimum brightness difference on the surface or in a cross-section. In other words, relatively bright sections and relatively dark sections are present, with the brightness difference being clearly visible. Imparting such a fixed minimum brightness difference to the silicon nitride sintered body is expected to widen the range of potential usage of the silicon nitride sintered body. For example, when a silicon nitride sintered body having a fixed minimum brightness difference is used as a wear-resistant part, the brightness of the surface of the wear-resistant part will vary with progressive wear, allowing the degree of wear loss on the surface of the wear-resistant part to be visually examined. When a silicon nitride sintered body having a fixed minimum brightness difference is applied as a probe-protecting tube, for example, a section of the silicon nitride sintered body with brightness difference can be used as a mark to visually judge the depth of penetration.

### BRIEF DESCRIPTION OF DRAWINGS

Fig. 1 is a schematic diagram showing an example of a silicon nitride sintered body.
Fig. 2 is a schematic diagram showing an example of a silicon nitride sintered body.
Fig. 3A is a schematic diagram showing an example of a silicon nitride sintered body.
Fig. 3B is a schematic diagram showing an example of a silicon nitride sintered body.
Fig. 4 is a schematic diagram showing an example of procedural flow in a method for producing a silicon nitride sintered body.
Fig. 5 is a schematic diagram showing an example of surface treatment of a silicon nitride sintered body.
Fig. 6 is a schematic diagram showing the shape and color tone of the silicon nitride sintered body of Example 1.
Fig. 7 shows changes in brightness in the depthwise direction of the silicon nitride sintered body of Example 1.
Fig. 8 is a schematic diagram showing the shape and color tone of the silicon nitride sintered body of Example 2.
Fig. 9 shows changes in brightness in the depthwise direction of the silicon nitride sintered body of Example 2.
Fig. 10 is a schematic diagram showing the shape and color tone of the silicon nitride sintered body of Example 3.
Fig. 11 shows changes in brightness in the depthwise direction of the silicon nitride sintered body of Example 3.
Fig. 12 is a schematic diagram for illustration of polishing and the polishing surface when obtaining the silicon nitride sintered body of Example 4.
Fig. 13 shows change in brightness on the surface of the silicon nitride sintered body of Example 4.
Fig. 14 is a schematic diagram showing the shape and color tone of the silicon nitride sintered body of Comparative Example 1.
Fig. 15 shows change in brightness in the depthwise direction of the silicon nitride sintered body of Comparative Example 1.
Fig. 16 is a schematic diagram showing the shape and color tone of the silicon nitride sintered body of Comparative Example 2.
Fig. 17 shows change in brightness in the depthwise direction of the silicon nitride sintered body of Comparative Example 2.

### DESCRIPTION OF EMBODIMENTS

Embodiments of the silicon nitride sintered body and process for its production will now be explained with reference to the accompanying drawings. However, the disclosed silicon nitride sintered body and process for its production are not limited to the embodiments described below.

### 1. Silicon nitride sintered body

The silicon nitride sintered body of the disclosure has multiple crystal grains and a grain boundary phase that bonds the crystal grains together, with a brightness difference of 5 or greater as an L* value.

### 1.1 Crystal grains

The silicon nitride sintered body of the disclosure has multiple crystal grains bonded together via a grain boundary phase. That the multiple crystal grains are bonded via a grain boundary phase can be confirmed from a microscope image of the material structure. Each crystal grain comprises silicon nitride. Each of the crystal grains may also contain impurities. The types of impurities in the crystal grains will depend on the types of impurities in the starting materials before sintering, the types of secondary starting materials, and the atmosphere during firing. For example, the crystal grains composing the silicon nitride sintered body may include metal elements other than Si, such as Al, Fe, Co or Ni. The crystal grains composing the silicon nitride sintered body may also contain compounds other than silicon nitride, such as silicon carbide (SiC). The sizes of the crystal grains in the silicon nitride sintered body of the disclosure are not particularly restricted. The sizes of the crystal grains will depend on the particle sizes and firing conditions for the starting material before sintering (for example, silicon nitride powder).

High-purity silicon nitride crystals exhibit virtually no absorption of visible light. Specifically, when the crystal grains of the silicon nitride sintered body (polycrystals) are of high purity and contain no impurities, then the sintered body is expected to exhibit white-grayish white color. However, an actual silicon nitride sintered body will generally exhibit a uniform black or dark gray color tone. This is because when metal elements such as Al, Fe, Co or Ni exist as solid solution in silicon nitride crystals, the electron energy levels formed by the solid solution element act as "color centers" to produce a broad absorption spectrum, and the silicon nitride crystals exhibit dark gray-black color overall (Al₂O₃-dissolved silicon nitride is known as SiAlON, but this will also be referred to as "silicon nitride" throughout the present specification). The same applies for the grain boundary phase of sintered bodies (polycrystals), which also exhibit a dark color similar to when the elements mentioned above are present. A dark color also tends to be exhibited even when the grain boundary phase is amorphous, as explained below. When the silicon nitride sintered body contains SiC, the sintered body naturally exhibits darker color.

Thus, when silicon nitride is replaced with certain elements (such as the metal elements mentioned above), a darker crystal color results. SiC contamination in the crystals is also a cause of coloration. In the silicon nitride sintered body of the disclosure, the crystal grains themselves may also exhibit color so long as the aforementioned specified brightness difference is ensured. However, minimizing coloration of the crystal grains themselves can ensure an even higher L* value at the first section 11 (described in detail below) which already has a relatively high L* value, and this tends to increase the brightness difference.

The present inventors have found that when the total content of Al, Fe, Co and Ni in a silicon nitride sintered body is less than 2000 ppm and the SiC content is less than 5000 ppm, a high L* value is ensured in the first section 11 and the aforementioned brightness difference tends to be notably increased. The total content of Al, Fe, Co and Ni in the silicon nitride sintered body may be 1750 ppm or lower, 1500 ppm or lower, 1250 ppm or lower, 1000 ppm or lower, 750 ppm or lower, 500 ppm or lower, 250 ppm or lower, 100 ppm or lower or 50 ppm or lower. The SiC content of the silicon nitride sintered body may also be 4500 ppm or lower, 4000 ppm or lower, 3500 ppm or lower, 3000 ppm or lower, 2500 ppm or lower, 2000 ppm or lower, 1500 ppm or lower, 1000 ppm or lower, 750 ppm or lower, 500 ppm or lower, 250 ppm or lower, 100 ppm or lower or 50 ppm or lower. If the total content of Al, Fe, Co and Ni in the sintered body is 2000 ppm or greater, or the SiC content is 5000 ppm or greater, the sintered body as a whole will become blackened, or in other words, an L* value of the sintered body as a whole will tend to be significantly lower and the brightness difference in the sintered body will tend to be reduced.

The present inventors have further found that even when the Al content of the silicon nitride sintered body is less than 1000 ppm, a high L* value is ensured in the first section 11 and the aforementioned brightness difference tends to be significantly increased. The Al content of the silicon nitride sintered body may be 750 ppm or lower, 500 ppm or lower, 250 ppm or lower, 100 ppm or lower or 50 ppm or lower. If the Al content of the sintered body is 1000 ppm or greater, the sintered body as a whole will exhibit color, i.e. an L* value of the sintered body as a whole will be lower, tending to reduce the brightness difference in the sintered body.

The present inventors have additionally found that when a large amount of Mg is present in a silicon nitride sintered body, this results in formation of low-melting-point compounds and tends to lower the heat resistance of the silicon nitride sintered body. The Mg content of the silicon nitride sintered body may therefore be lower than 1800 ppm.

The silicon nitride sintered body comprises silicon nitride crystal grains at 80 mass% or greater and less than 100 mass%, or at 80 mass% to 97 mass%, for example. The remainder may be a grain boundary phase having a composition other than silicon nitride. The silicon nitride crystal grain content can be measured by X-ray diffraction, using a calibration curve.

### 1.2 Grain boundary phase

The grain boundary phase may be one composed of a material capable of bonding together the crystal grains. The grain boundary phase may be a glass phase, a crystal phase, or a mixed phase comprising a glass phase and a crystal phase. For the silicon nitride sintered body of the disclosure, however, it is important to control the color tone of the grain boundary phase. As mentioned above, it is important to control the nitrogen content in addition to lowering the concentration of impurities and SiC. A deficiency or excess of nitrogen atoms is another cause of color centers, tending to result in a broader absorption spectrum, i.e. reduction in the brightness difference of the sintered body. Moreover, while the grain boundary phase may be a glass phase or a crystal phase as mentioned above, a glass phase is essentially non-stoichiometric and tends to result in color tone variation. In other words, a higher proportion of glass phase in the grain boundary phase makes it difficult to control the color tone of the grain boundary phase and tends to reduce the brightness difference of the sintered body. The present inventors have found that it is easy to control the color tone if all or a portion of the grain boundary phase is a crystal phase. That is, if the grain boundary phase comprises a crystalline component, the color tone of the sintered body as a whole is easier to control and the brightness difference tends to increase.

The type of crystalline component will depend on the types of secondary starting materials (such as sintering aids) before sintering, for example. As explained below, if a suitable secondary starting material is employed and the firing conditions allow production of crystalline components in the grain boundary phase, then the grain boundary phase will contain a crystalline component. The present inventors have found that when the grain boundary phase comprises at least one compound selected from the group consisting of Si₂N₂O, Y₂Si₂O₇, Yb₂Si₂O₇, Y₂Si₃O₃N₄ and YbSi₃O₃N₄ as a crystalline component, the color of the grain boundary phase is significantly lightened and the brightness difference specified above can be more easily ensured.

### 1.3 Brightness

The silicon nitride sintered body of the disclosure has a brightness difference of 5 or greater as an L* value brightness, based on an L*a*b* (L-star, a-star, b-star) color system (used in JIS Z 8781-4). If the silicon nitride sintered body has such a fixed minimum brightness difference, the silicon nitride sintered body is expected to have a wider range of potential uses. For example, when a silicon nitride sintered body with a brightness difference is used as a wear-resistant part, the brightness on the surface of the wear-resistant part varies with progressive wear, allowing the degree of wear loss on the surface of the wear-resistant part to be visually judged. When a silicon nitride sintered body with a brightness difference is applied as a probe-protecting tube, the part of the silicon nitride sintered body with a brightness difference can be used as a mark to visually judge the depth of penetration. The brightness difference of the silicon nitride sintered body can be utilized for various visual examinations. Such visual examination will be facilitated if the brightness difference is 5 or greater in terms of an L* value. From the viewpoint of visibility of the brightness difference, the silicon nitride sintered body preferably has a larger brightness difference. In this regard, the silicon nitride sintered body of the disclosure may have a brightness difference of 6 or greater, 7 or greater, 8 or greater, 9 or greater or 10 or greater, as an L* value. The brightness difference is most preferably 10 or greater, as an L* value.

When the brightness difference of the silicon nitride sintered body is to be utilized for visual judgment in this manner, the brightness difference is preferably confirmed in as small a region of the silicon nitride sintered body as possible, or in other words, the contrast is preferably high. When an L* value of the silicon nitride sintered body of the disclosure is measured from a point A on the surface or in a cross-section of the sintered body toward a point B (a point different from point A) on the surface or in a cross-section of the sintered body, for example, preferably the brightness difference specified above is observed, with an L* value of 5 or greater within a range of 5.0 mm, within a range of 3.0 mm, within a range of 1.0 mm or within a range of 0.5 mm from point A to point B. Stated differently, the silicon nitride sintered body may have a first section with a relatively high L* value, a second section with a relatively low L* value, and a transition region between the first section and second section, the difference between an L* value in the first section and an L* value in the second section being 5 or greater, and the length of the transition region between the first section and second section being 5.0 mm or smaller, 3.0 mm or smaller, 1.0 mm or smaller or 0.5 mm or smaller. In this case, the shapes and sizes of the first section, second section and transition region may be appropriately set according to the purpose of use of the silicon nitride sintered body. If the brightness difference in a cross-section of the silicon nitride sintered body is exposed on the surface by machining, it may be possible to ensure the desired brightness difference on the surface of the silicon nitride sintered body. In this case, the size of the transition region on the machined surface is determined by the size of the transition region of the cross-section of the silicon nitride sintered body and the angle of the machined surface with respect to sintered surface. A larger machining surface angle with respect to the sintered surface will increase the contrast formed on the surface of the machined article, but the machining angle may be selected based on comprehensive judgment of the shape of the machined article, the positional relationship of color tones, and the strength of contrast.

The silicon nitride sintered body of the disclosure may also comprise portions having an L* value of 45 or greater, 47 or greater, 50 or greater, 53 or greater or 55 or greater. For example, when the silicon nitride sintered body has a first section with a relatively high L* value and a second section with a relatively low L* value, an L* value of the first section may be 45 or greater, 47 or greater, 50 or greater, 53 or greater or 55 or greater. There is no particular restriction on the upper limit for an L* value in the first section. An L* value for the first section may be 75 or lower or 70 or lower, for example.

The silicon nitride sintered body of the disclosure may also comprise portions having an L* value of 55 or lower, 53 or lower, 50 or lower, 47 or lower or 45 or lower. For example, when the silicon nitride sintered body has a first section with a relatively high L* value and a second section with a relatively low L* value, an L* value of the second section may be 55 or lower, 53 or lower, 50 or lower, 47 or lower or 45 or lower. There is no particular restriction on the lower limit for an L* value in the second section. An L* value for the second section may be 25 or greater or 30 or greater, for example.

### 1.4 Specific examples

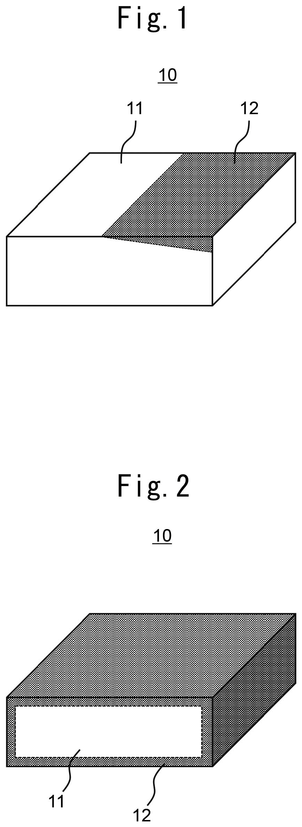

Figs. 1 and 2 show specific examples of silicon nitride sintered bodies having differences in brightness of 5 or greater as an L* value. As shown in Figs. 1 and 2, the silicon nitride sintered body 10 according to one embodiment has a first section 11 with a relatively high L* value and a second section 12 with a relatively low L* value, the difference between an L* value at the first section 11 and an L* value at the second section 12 being 5 or greater.

### 1.4.1 First mode

The silicon nitride sintered body of the first mode has the brightness difference described above on its surface. Specifically, as shown in Fig. 1, the silicon nitride sintered body 10 of the first mode may have the aforementioned first section 11 and second section 12 on its surface. In this case, the brightness difference on the surface of the silicon nitride sintered body 10 can be utilized for visual judgments as described above. The silicon nitride sintered body 10 may also have a transition region between the first section 11 and second section 12 on the surface. In this case, the length of the transition region between the first section 11 and the second section 12 may be 5.0 mm or smaller, 3.0 mm or smaller, 1.0 mm or smaller or 0.5 mm or smaller. For example, the silicon nitride sintered body 10 of the first mode may have the aforementioned brightness difference within a range of up to 5.0 mm in the direction along the surface, or it may have the aforementioned brightness difference within a range of up to 3.0 mm in the direction along the surface, or it may have the aforementioned brightness difference within a range of up to 1.0 mm in the direction along the surface, or it may have the aforementioned brightness difference within a range of up to 0.5 mm in the direction along the surface.

### 1.4.2 Second mode

The silicon nitride sintered body of the second mode has the brightness difference described above in its cross-section. Specifically, as shown in Fig. 2, the silicon nitride sintered body 10 of the second mode may have the aforementioned first section 11 and second section 12 in its cross-section. In this case, the brightness difference in the cross-section of the silicon nitride sintered body 10 can be utilized for visual judgments as described above. The brightness on the surface of the silicon nitride sintered body 10, for example, varies with progressive wear of the silicon nitride sintered body 10. The silicon nitride sintered body 10 may also have a transition region between the first section 11 and second section 12 in its cross-section. In this case, the length of the transition region between the first section 11 and the second section 12 may be 5.0 mm or smaller, 3.0 mm or smaller, 1.0 mm or smaller or 0.5 mm or smaller. For example, in a cross-section perpendicular to the surface, the silicon nitride sintered body 10 of the second mode may have the aforementioned brightness difference within a range of up to 5.0 mm in the direction perpendicular to the surface, or it may have the aforementioned brightness difference within a range of up to 3.0 mm in the direction perpendicular to the surface, or it may have the aforementioned brightness difference within a range of up to 1.0 mm in the direction perpendicular to the surface, or it may have the aforementioned brightness difference within a range of up to 0.5 mm in the direction perpendicular to the surface. In other words, the width of the transition region in the direction perpendicular to the surface may be 5.0 mm or smaller, 3.0 mm or smaller, 1.0 mm or smaller or 0.5 mm or smaller.

Fig. 2 shows a mode wherein the silicon nitride sintered body 10 has a second section 12 with a relatively low L* value on the surface side and a first section 11 with a relatively high L* value on the inner side (further inward than the second section 12), but the technology of the disclosure is not limited to this mode. For example, the silicon nitride sintered body 10 may have a first section 11 with a relatively high L* value on the surface layer side, and a second section 12 with a relatively low L* value on the inner side. The first section 11 and second section may also be sections where the brightness difference is less than 5 as an L* value, and the width is 2 mm or greater in the direction from the surface toward the interior of the sintered body (especially the direction from the surface toward the centroid of a cross-sectional of the sintered body) (the "uniform brightness region" explained below).

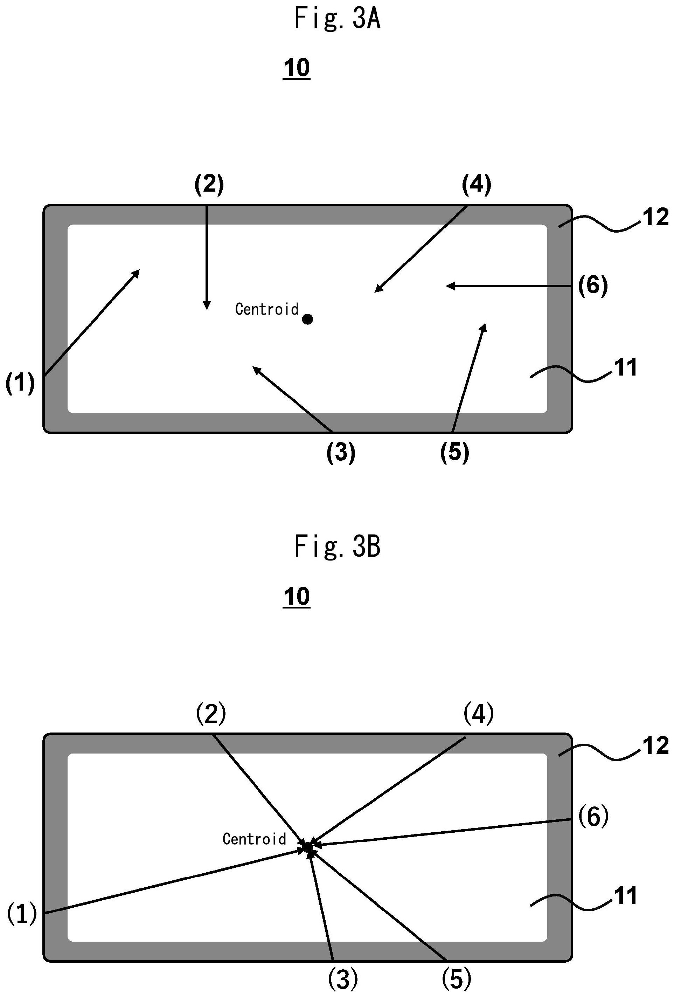

As shown in Fig. 3A, the silicon nitride sintered body of the second mode may include in its cross-section a section where, when the brightness is measured from the surface of the sintered body toward the interior, two or more uniform brightness regions are observed where the brightness difference is less than 5 as an L* value and the width is 2 mm or greater. That is, when the brightness of a cross-section of the sintered body is measured from the surface of the sintered body toward the interior, two or more "uniform brightness regions with brightness differences of less than 5 as an L* value and widths of 2 mm or greater", may be present in some area of the cross-section. For measurement of the brightness from the surface toward the interior of the sintered body in Fig. 3A, there are no particular restrictions on the direction in which the brightness is measured (the direction from the surface of the sintered body toward the interior). In Fig. 3A, two or more "uniform brightness regions having a brightness difference of less than 5 as an L* value and a width of 2 mm or greater" may be observed in at least one direction from among directions (1) to (6), for example. The width of the uniform brightness region may be 2.5 mm or greater, 3.0 mm or greater or 3.5 mm or greater. The upper limit for the width of the uniform brightness region, on the other hand, is not particularly restricted. When the sintered body is machined to form contrast on the surface of the sintered body, the machining allowance can be reduced if the width of the uniform brightness region is 8.0 mm or smaller.

As mentioned above, the silicon nitride sintered body 10 may have in its cross-section a first section 11 and a second section 12. When the brightness difference at the first section 11 is less than 5 as an L* value, the width of the first section 11 is 2 mm or greater in the direction from the surface toward the interior of the sintered body, the brightness difference at the second section 12 is less than 5 as an L* value, and the width of the second section 12 in the direction from the surface toward the interior of the sintered body is 2 mm or greater, then the silicon nitride sintered body 10 has a section where, when the brightness is measured in a cross-section from the surface of the sintered body toward the interior, two or more uniform brightness regions are observed in which the brightness difference is less than 5 as an L* value and the width is 2 mm or greater.

As shown in Fig. 3B, the silicon nitride sintered body of the second mode may comprise in its cross-section a part in which two or more uniform brightness regions are observed where, when the brightness is measured from the surface of the sintered body toward the centroid of the cross-section, the brightness difference is less than 5 as an L* value and the width is 2 mm or greater. That is, when the brightness of a cross-section of the sintered body is measured from the surface of the sintered body toward the interior centroid, two or more "uniform brightness regions with brightness differences of less than 5 as an L* value and widths of 2 mm or greater", may be observed in some location of the cross-section. In Fig. 3B, for example, two or more "uniform brightness regions having a brightness difference of less than 5 as an L* value and a width of 2 mm or greater", may be observed in at least one direction from among directions (1) to (6). The width of the uniform brightness region may be 2.5 mm or greater, 3.0 mm or greater or 3.5 mm or greater. The upper limit for the width of the uniform brightness region, on the other hand, is not particularly restricted. When the sintered body is machined to form contrast on the surface of the sintered body, the machining allowance can be reduced if the width of the uniform brightness region is 8.0 mm or smaller.

As mentioned above, the silicon nitride sintered body 10 may have in its cross-section a first section 11 and a second section 12. When the brightness difference at the first section 11 is less than 5 as an L* value, the width of the first section 11 is 2 mm or greater in the direction from the surface toward the cross-sectional center of the sintered body, the brightness difference at the second section 12 is less than 5 as an L* value, and the width of the second section 12 is 2 mm or greater in the direction from the surface toward the cross-sectional center of the sintered body, then the silicon nitride sintered body 10 has in its cross-section a section where, when the brightness is measured from the surface of the sintered body toward the centroid of the cross-section, two or more uniform brightness regions are observed in which the brightness difference is less than 5 as an L* value and the width is 2 mm or greater.

As shown in Figs. 3A and B, when two or more "uniform brightness regions with a brightness difference of less than 5 as an L* value and a width of 2 mm or greater" are observed in a cross-section of the silicon nitride sintered body, the silicon nitride sintered body has a brightness transition region where the brightness difference is 5 or higher as an L* value (for example, the transition region mentioned above), between one single uniform brightness region (for example, the first section 11) and the other uniform brightness region (for example, the second section 12). If the one uniform brightness region and the other uniform brightness region both have widths of 2 mm or greater, this will more easily produce contrast in the silicon nitride sintered body, and the visibility of changes in brightness of the silicon nitride sintered body will be further enhanced. For example, when the silicon nitride sintered body is used as a wear-resistant part, with one uniform brightness region and another uniform brightness region of the silicon nitride sintered body both having widths of 2 mm or greater, and a brightness transition region being present between the one uniform brightness region and the other uniform brightness region, then this will allow positional changes between the uniform brightness region and the brightness transition region to be more easily visible when the wear-resistant part has suffered wear, and will allow wear loss on the surface of the wear-resistant part to be more easily discernible.

### 1.4.3 Third mode

The silicon nitride sintered body of the third mode has the brightness difference described above both on the surface and in a cross-section. That is, the silicon nitride sintered body of the third mode may be a combination of the first mode and second mode.

### 1.5 Other aspects

The silicon nitride sintered body of the disclosure is one having the crystal grains and grain boundary phase described above, and having the brightness difference described above. As mentioned above, the silicon nitride sintered body may comprise silicon nitride at 80 mass% or greater and lower than 100 mass%, or at 80 mass% or greater and lower than 97 mass%, for example. The silicon nitride sintered body of the disclosure may also be applied in various forms, depending on the purpose of use. The silicon nitride sintered body may be applied for special purposes immediately after sintering, or it may be applied for special purposes after surface treatment following sintering. In the silicon nitride sintered body of the disclosure, the first section having a relatively high L* value and the second section having a relatively low L* value may be disposed in a regular manner or in an irregular manner.

### 2. Method for producing silicon nitride sintered body

The present inventors have found that a silicon nitride sintered body having the brightness difference described above can be produced by controlling temperature increase especially during the firing step. The following production method is an example of a method for producing the silicon nitride sintered body of the disclosure.

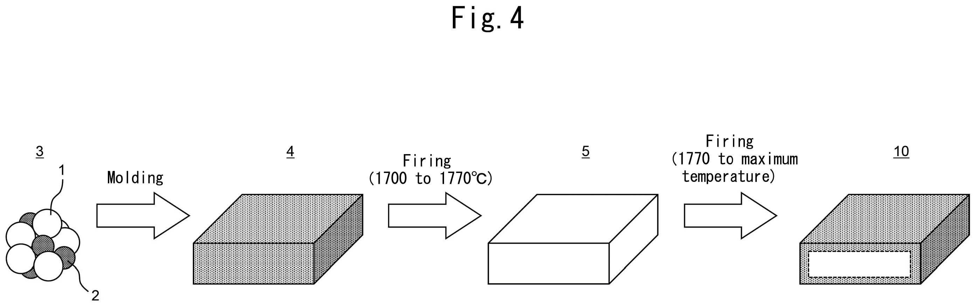

The method for producing a silicon nitride sintered body according to one embodiment, as illustrated in as shown in Fig. 4, comprises:
kneading silicon nitride powder 1 and a secondary starting powder 2 to obtain granules 3, and
molding and firing the granules 3,
wherein
the maximum temperature during firing is higher than 1770°C,
the atmosphere at 1700°C or higher during temperature increase in the firing period comprises nitrogen gas at 99.9 vol% or greater and has an absolute pressure of 0.3 MPa or higher and lower than 1.1 MPa,
the time required for temperature increase from 1700°C to 1770°C during the firing period is 40 to 120 minutes,
the time required for temperature increase from 1770°C to the maximum temperature during the firing period is 30 to 90 minutes, and
the holding time at the maximum temperature during the firing period is 16 hours or less.

### 2.1 Silicon nitride powder

The silicon nitride powder 1 may be one produced by a known method. The present inventors have found that higher purity of the silicon nitride powder 1 tends to increase an L* value at the first section and increase the brightness difference of the sintered body. In this regard, the purity of the silicon nitride powder 1 may be 98.70% or higher or 98.95% or higher. The size of the silicon nitride powder 1 is not particularly restricted.

### 2.2 Secondary starting powder

It is difficult to accomplish sintering with silicon nitride powder 1 alone. Therefore, secondary starting powder 2 is mixed together with the silicon nitride powder 1 for production of the silicon nitride sintered body 10. The secondary starting material used is one that can withstand the firing conditions described below. Using a secondary starting material can also produce a desired crystalline component in the grain boundary phase. If the melting point or softening point of the secondary starting material is too low, melting may occur when firing is carried out under the firing conditions described below, potentially interfering with production of the sintered body. When using a secondary starting material with a low melting point or softening point, lowering the firing temperature so as not to exceed the melting point or softening point of the secondary starting material may make it impossible to reach the maximum temperature at above 1770°C which is necessary for the invention, and it may also become impossible to produce the desired crystalline component in the grain boundary phase, tending to result in blackening of the sintered body as a whole. In this regard, the secondary starting material is preferably selected to be one that produces the desired crystalline component in the grain boundary phase when fired under the firing conditions described below. The secondary starting material may include one or more compounds selected from among Si-containing compounds (such as silicon oxide), Y-containing compounds (such as yttrium oxide) and Yb-containing compounds (such as ytterbium oxide).

### 2.3 Kneading and granulation of powder

As shown in Fig. 4, kneading of the silicon nitride powder 1 and the secondary starting powder 2 produces granules 3 comprising silicon nitride powder 1 and secondary starting powder 2. The mixing ratio of the silicon nitride powder 1 and the secondary starting powder 2 may be determined as appropriate for the desired sintered body performance. The method for kneading and granulating the silicon nitride powder 1 and secondary starting powder 2 is also not particularly restricted. For example, the silicon nitride powder 1 and secondary starting powder 2 may be mechanically mixed together with a binder, dispersion material and solvent to obtain a slurry, and the slurry may then be dried by spray drying to allow kneading and granulation of the silicon nitride powder 1 and secondary starting powder 2. The types of binder, dispersing agent and solvent used in this case are not particularly restricted. The size of the granules 3 are also not particularly restricted.

### 2.4 Molding and firing of granules

The granules 3 are molded before firing, as illustrated in Fig. 4. The granules 3 may be molded by publicly known molding means. The molding means may be selected as appropriate for the desired shape of the sintered body. For example, the granules 3 may be packed into a die and press molded, or they may be press molded by hydrostatic pressing, or a combination of these. The molded body (green body) 4 is fired under the conditions described above to obtain a sintered body 10. The molded body at the point after the start of firing until completion of firing (complete sintering) will hereunder be referred to as the "unfired body 5".

The sections of the unfired body 5 that are to serve as the grain boundary phase of the silicon nitride sintered body undergo nitriding during the firing process. The present inventors have found that nitriding of the grain boundary phase is insufficient in a temperature range below 1700°C, but that in a temperature range of 1700°C or higher during the firing step, nitrogen infiltrates into the interior of the unfired body 5 resulting in replacement of atoms such as oxygen with nitrogen, so as to cause formation of a stable grain boundary phase composition (a crystalline-containing phase) and disappearance of color centers, thereby increasing an L* value. An L* value inside the unfired body 5 increases by this mechanism, but an excessive amount of nitrogen is supplied near the surface, producing a composition with excess nitrogen and allowing color centers to be re-generated. In other words, while an L* value increases inside the unfired body 5, an L* value decreases near the surface. This produces a brightness difference in the sintered body.

### 2.4.1 Time required for temperature increase from 1700°C to 1770°C

The present inventors have found that L* value increase and L* value decrease proceed simultaneously by the aforementioned mechanism at the respective sections of the unfired body 5 during the firing process, but that in the temperature range from 1700°C to 1770°C it is L* value increase that takes place preferentially in the unfired body 5 as a whole. If the time required for increase from 1700°C to 1770°C is too short, densification will proceed without sufficient infiltration of nitrogen into the interior of the unfired body 5, thus lowering an L* value of the finally obtained sintered body as a whole and making it difficult to ensure the desired brightness difference for the sintered body. If the time required for increase from 1700°C to 1770°C is too long, on the other hand, infiltration of nitrogen into the interior of the unfired body 5 will be excessive, thus likewise lowering an L* value of the finally obtained sintered body as a whole and making it difficult to ensure the desired brightness difference for the sintered body. The present inventors have found that when the time required for temperature increase from 1700°C to 1770°C is 40 to 120 minutes, for example, it is easier to achieve a suitable increase in an L* value for the unfired body 5 as a whole.

### 2.4.2 Atmosphere at 1700°C or higher during temperature increase during firing

The present inventors have found that when the absolute nitrogen pressure is lower than 0.3 MPa in an atmosphere at 1700°C or higher during the temperature increase during firing, permeation of nitrogen into the unfired body 5 is insufficient and increase in an L* value at the grain boundary phase is also insufficient, making it difficult to ensure the desired brightness difference for the finally obtained sintered body. If the absolute nitrogen pressure is 1.1 MPa or higher, permeation of nitrogen into deeper locations of the unfired body 5 becomes excessive, lowering an L* value of the finally obtained sintered body as a whole and making it difficult to ensure the desired brightness difference. In contrast, if the atmosphere at 1700°C or higher during the temperature increase during the firing period contains nitrogen gas at 99.9 vol% or higher and has an absolute pressure of 0.3 MPa or higher and lower than 1.1 MPa, then an L* value of the unfired body 5 as a whole will increase in a more suitable manner during the increase from 1700°C to 1770°C, thus helping to ensure the desired brightness difference for the finally obtained sintered body. If the heat treatment time is lengthened under conditions with a low absolute nitrogen pressure within the range of the invention, then conversely shortening the heat treatment time under conditions with a high absolute nitrogen pressure will make it easier to ensure the desired brightness difference.

### 2.4.3 Time required for temperature increase from 1770°C to reach maximum temperature during firing

The present inventors have found that nitrogen infiltration and lowering of an L* value near the surface of the unfired body 5 takes place preferentially in the temperature range from 1770°C to the maximum temperature. That is, the temperature-elevating rate may be lowered while increasing from 1770°C to the maximum temperature, or held constant during the period from 1770°C to the maximum temperature, in order to supply nitrogen in a sufficient amount to the region near the surface of the unfired body 5 and to lower an L* value. By controlling the time, it is possible to widen the size of the low L* value region near the surface and to increase the brightness difference of the finally obtained sintered body. The same effect is also obtained by increasing the pressure of nitrogen gas pressure in the firing atmosphere during increase from 1770°C to the maximum temperature. When the nitrogen gas pressure is increased, however, nitrogen tends to infiltrate into the interior of the unfired body 5, thus tending to blur the color tone boundaries. By increasing the temperature-elevating rate from 1770°C up to the maximum temperature or lowering the nitrogen gas pressure to restrict supply of nitrogen to the unfired body 5, incidentally, it is also possible to weaken the brightness difference in the finally obtained sintered body, although that is tangential to the purpose of the silicon nitride sintered body of the disclosure. The present inventors have found that limiting the time required for temperature increase from 1770°C to the maximum temperature to 30 to 90 minutes is sufficient to ensure an L* value brightness difference of 5 or greater in the final obtained sintered body, and to render contrast more distinct. If the time from 1770°C to the maximum temperature is 30 to 90 minutes, then it will be possible to form uniform brightness regions with brightness difference of less than 5 as an L* value and a width of 2 mm or greater on the surface side of the silicon nitride sintered body 10, as shown in Figs. 3A and B. Incidentally, in order to obtain a width of 2.5 mm or greater, the time for increase from 1770°C to the maximum temperature may be 40 to 90 minutes, in order to obtain a width of 3.0 mm or greater, the time for increase from 1770°C to the maximum temperature may be 50 to 90 minutes, and in order to obtain a width of 3.5 mm or greater, the time for increase from 1770°C to the maximum temperature may be 60 to 90 minutes.

### 2.4.4 Holding time at maximum temperature

The holding time at the maximum temperature may be a time such that the entire unfired body 5 is sufficiently densified, and the optimal time may vary depending on the size of the sintered body. Once the maximum temperature has been reached, the unfired body 5 becomes densified to a certain degree, and increasing or decreasing the holding time in this step makes it difficult for interior changes in color tone to occur. The holding time will generally be a minimum of 2 hours. On the other hand, infiltration of nitrogen will be excessive if the holding time is too long, and therefore the maximum time is preferably 16 hours. In a temperature range of 1800°C or higher and especially 1830°C or higher, some of the constituent substances decompose on the surface of the unfired body 5. Such decomposition products have high L* values. The decomposition phase produced on the surface of the unfired body 5 may thus be used as a section with a high L* value, in order to ensure the desired brightness difference. If the maximum temperature exceeds 1870°C, however, sublimation decomposition of silicon nitride may occur even up to the interior of the sintered body and the mechanical properties may significantly deteriorate. As mentioned above, the maximum temperature during firing may be above 1770°C, and is preferably 1800°C to 1870°C. When it is desired to form a phase with a high L* value by decomposition on the surface layer, the maximum temperature may be set to between 1830°C and 1870°C, and when it is not desired to form a phase with a high L* value, the maximum temperature may be higher than 1770°C and lower than 1830°C.

By employing a low-melting-point crystalline substance or a low-softening-point glassy substance as the material composing the grain boundary phase, it is possible to obtain a silicon nitride sintered body that is dense at low temperature, but this can also lower an L* value of the sintered body as a whole, making it difficult to ensure the desired brightness difference. It is therefore necessary to select a material with a high melting point or softening point as the material forming the grain boundary phase. Specifically, as mentioned above, a secondary starting material with a high melting point or softening point may be selected.

As mentioned above, in a temperature range of 1700°C or higher, limiting the absolute pressure in the furnace to below 0.3 MPa results in insufficient permeation of nitrogen into the interior of the unfired body 5, making it difficult to ensure the desired brightness difference for the final fired body. In the production method of the disclosure, the color tone can be controlled by varying the nitrogen gas pressure depending on the temperature range, within the aforementioned pressure range of 0.3 MPa or higher and lower than 1.1 MPa. Using Ar as the atmosphere gas, on the other hand, makes it impossible for nitrogen to infiltrate into the unfired body 5. In other words, it is difficult to employ an atmosphere gas composed mainly of Ar at a temperature of 1700°C or higher where infiltration of nitrogen is required. In a temperature range of 1700°C or lower, however, the gas type and pressure may be selected as appropriate from the viewpoint of economy, and a gas other than nitrogen may be employed.

With the production method of the disclosure it is possible to produce a silicon nitride sintered body having multiple crystal grains and a grain boundary phase that binds the crystal grains together, and having a brightness difference of 5 or greater as an L* value. For example, it is possible to produce the following silicon nitride sintered bodies (1) and (2).
(1) A silicon nitride sintered body having a double structure for the color tone in its cross-section. Specifically, an L* value in at least a portion from the surface to a first depth is at least 5 lower than an L* value in at least a portion of a deeper section than the first depth.
(2) A silicon nitride sintered body having a triple structure for the color tone in its cross-section. Specifically, an L* value in at least a portion of the surface is at least 5 higher than an L* value in at least a portion between the surface and the first depth, and an L* value in at least a portion from the surface to the first depth is at least 5 lower than an L* value in at least a portion of a deeper section than the first depth.

### 2.4.5 Additional steps

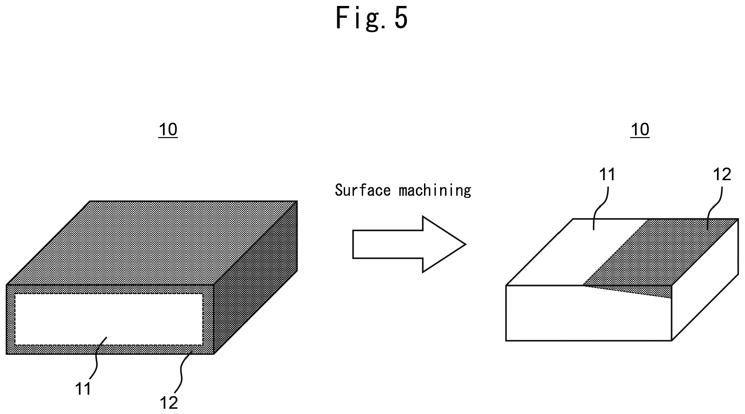

As shown in Fig. 5, the production method of the disclosure may comprise surface treatment of the sintered body 10 obtained after firing. For example, the surface of the sintered body 10 may be subjected to mechanical polishing or grinding to remove at least a portion of the surface layer of the sintered body 10 and expose the interior of the sintered body 10, thereby forming a first section 11 or second section 12 with a desired brightness difference on the surface of the sintered body 10 from which the surface layer has been removed.

### 3. Additional notes

The method for producing a silicon nitride sintered body of the disclosure is industrially useful and allows production of large-sized sintered bodies having a thickness or diameter of 10 mm or greater and a long side or axial length of 100 mm or greater. The silicon nitride sintered body of the disclosure has a visible brightness difference that is easily distinguishable. For example, when a surface exhibiting a brightness difference is used as the wear surface in a liner material, the location of contrast will shift as a result of wear. That is, the degree of wear loss can be visualized by the degree to which the contrast has shifted. As a specific example, a ceramic part for a wear-resistant liner may have a square shape with ≥100 mm sides for the surface that is to be subjected to wear, and a thickness of 15 mm or greater. By machining the ceramic part in such a manner that a specified brightness difference appears within the plane with ≥100 mm sides, it is possible to render the degree of wear visible as a shift in the location of contrast. In addition, the silicon nitride sintered body of the disclosure maintains consistent mechanical properties without softening even at high temperatures of above 1500°C. In other words, it can also be used as a part for use in high-temperature environments.

### EXAMPLES

The present invention will now be further described using Examples, with the understanding that these Examples are not intended to be limitative on the invention. The invention may be applied under a variety of different conditions that do not fall outside of its gist and that allow its object to be achieved.

### 1. Example 1

### 1.1 Kneading and granulation of starting materials

A binder and a dispersing material were added to a starting material comprising silicon oxide (3.3 mass%), ytterbium oxide (6 mass%) and commercially available silicon nitride powder (purity: 98.84%) as the remainder, and the components were mixed using ceramic balls in a ceramic liner, with purified water as the solvent. The obtained slurry was subjected to airflow drying (by spray drying) to obtain granules.

### 1.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 1.3 Degreasing and firing

The obtained green body was degreased in an air atmosphere at 350°C and then fired in the following manner. The firing was carried out while pressurizing using nitrogen gas with a purity of 99.99% and controlling the furnace to an absolute pressure of 0.7 MPa. The maximum temperature during firing was 1820°C, the time required for temperature increase from 1700°C to 1770°C was 100 minutes and the time required for increase from 1770°C to 1820°C was 70 minutes, with each temperature increase at a fixed rate. After reaching the maximum temperature of 1820°C, the body was held for 4 hours at the maximum temperature and then cooled to obtain a sintered body for Example 1.

### 1.4 Evaluation of sintered body

### 1.4.1 Visual observation

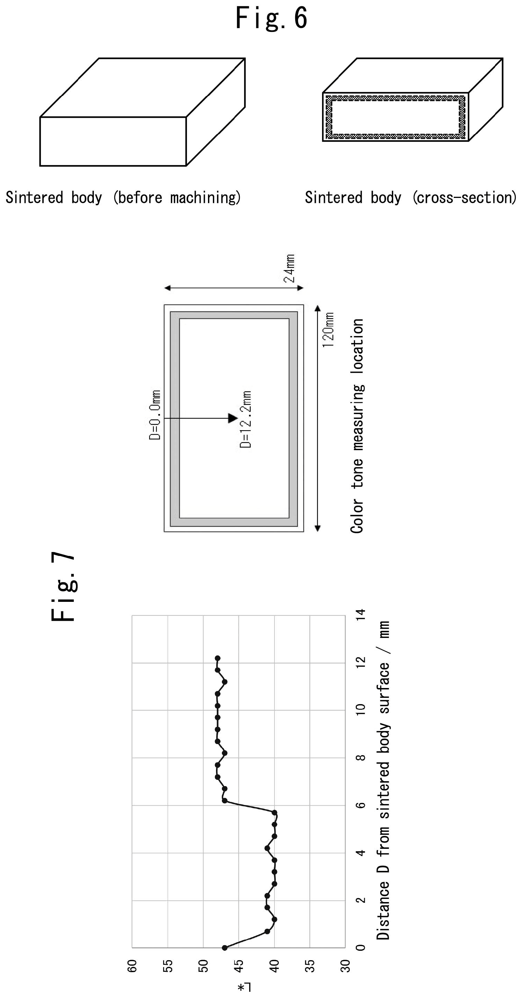

The obtained sintered body had a square surface with 120 mm sides, and a sheet form with a thickness of 24 mm. The sintered body was cut near the center of one side and a 5 mm-wide cross-section test piece was cut out. Upon visually observing the color tone of the sintered body cross-section, the surface of the sintered body and the region up to about 0.5 mm in the direction perpendicular to the surface appeared grayish white, with a nearly-black, dark gray region with a thickness of approximately 5 mm on the inner side and with a grayish white color from the inner side toward the center. In other words, the color tone was a three-layer structure with distinct contrast as shown in Fig. 6.

### 1.4.2 Color tone measurement

The color tone of the cross-section was measured. The colorimeter used for measurement was a C50µ by Suga Test Instruments Co., Ltd., and an L*a*b* value was calculated under conditions with illumination: 45°, bidirectional, light reception: 0°, light source: D65, measuring region: φ0.2 mm. With depth from the surface as D mm, the color tone was measured using first D = 0 (sintered surface), followed by measurement at location D = 0.7 mm, and subsequently followed by measurement to the thickness center while increasing the depth in 0.5 mm increments. The measurement results are shown in Fig. 7.

As shown in Fig. 7, an L* value on the surface (sintered body surface) was 47, with an L* value falling to 41 at the next measurement point (D = 0.7 mm). An L* value was in the range of 41 to 40 up to location D = 5.7 mm in the depthwise direction, an L* value increasing to 47 between D = 5.7 mm and D = 6.2 mm, and an L* value was in the range of 47 to 48 up to location D = 12.2 mm at the center section in the depthwise direction. As shown in Fig. 7, the sintered body of Example 1 contained a part in the cross-section where, when the brightness was measured from the surface of the sintered body toward the interior, two or more uniform brightness regions were observed where the brightness difference was less than 5 as an L* value and the widths were 2 mm or greater. The sintered body of Example 1 also contained a part in the cross-section where, when the brightness was measured from the surface of the sintered body toward the centroid of the cross-section, two or more uniform brightness regions were observed where the brightness difference was less than 5 as an L* value and the widths were 2 mm or greater. The width of the uniform brightness region was less than 0.7 mm in the phase on the outermost surface side (grayish white phase), 5 mm or greater and less than 6.2 mm in the phase near the surface (dark gray phase), and 11.6 mm or greater and less than 12.6 mm in the phase on the inner side (grayish white phase).

### 1.4.3 Crystal phase and density analysis

When the crystal phase on the unmachined surface of the sintered body was analyzed by X-ray diffraction, two different crystals were confirmed for silicon nitride and Yb₂Si₃O₃N₄. Yb₂Si₃O₃N₄ is a crystal produced by sublimation decomposition between silicon nitride and the grain boundary phase, and it is characterized by having a high L* value. The sintered body was cut near the center of one side and a 5 mm-wide evaluation test piece was cut out. The crystal phase was confirmed by X-ray diffraction at the center region of the cross-section of the test piece and at a location 2 mm from the surface in the direction toward the center. Peaks for silicon nitride, Si₂N₂O, Yb₂Si₂O₇ and SiC (slight) were confirmed at all locations. Yb₂Si₃O₃N₄, Si₂N₂O and Yb₂Si₂O₇ constituted the grain boundary phase of the sintered body. On the other hand, there was no visible broad reflection that would have indicated the presence of a glass phase. Calculation for each of the crystals inside the sintered body from a previously measured calibration curve resulted in 89.5 mass% for silicon nitride, 2.6 mass% for Si₂N₂O, 7.7 mass% for Yb₂Si₂O₇ and 0.2 mass% for SiC (2000 ppm). The SiC was thought to have infiltrated during kneading of the starting materials. The theoretical density of the crystals was calculated from the aforementioned composition ratio to be 3.30 g/cm³. The 1 mm-thick section of the cross-section test piece was removed by grinding from the sintered surface, and the density was measured to be 3.10 g/cm³. The relative density of the sintered body was calculated to be 94%.

### 1.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 841 ppm, Fe: 247 ppm, Co: 2 ppm and Ni: 13 ppm, for a total content of 1103 ppm. These impurities are believed to have been derived mainly from the silicon nitride starting material.

### 2. Example 2

### 2.1 Kneading of starting materials

A binder and a dispersing material were added to a starting material comprising silicon oxide (6 mass%), magnesium oxide (2.5 mass%), yttrium oxide (1 mass%) and commercially available silicon nitride powder (purity: 98.84%) as the remainder, and the components were mixed using ceramic balls in a ceramic liner, with purified water as the solvent. The obtained slurry was subjected to airflow drying (by spray drying) to obtain granules.

### 2.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 2.3 Degreasing and firing

The obtained green body was degreased in an air atmosphere at 350°C and then fired in the following manner. The firing was carried out while pressurizing using nitrogen gas with a purity of 99.99% and controlling the furnace to an absolute pressure of 0.5 MPa. The maximum temperature during firing was 1800°C, the temperature was increased at a constant rate over a period of 25 minutes from 1700°C until reaching 1750°C, and after holding at 1750°C for 50 minutes, the temperature was increased at a constant rate over a period of 10 minutes from 1750°C until reaching 1770°C, and the temperature was subsequently increased at a constant rate over a period of 50 minutes from 1770°C until reaching 1800°C. After reaching the maximum temperature of 1800°C, the body was held for 4 hours at the maximum temperature and then cooled to obtain a sintered body for Example 2.

### 2.4 Evaluation of sintered body

### 2.4.1 Visual observation

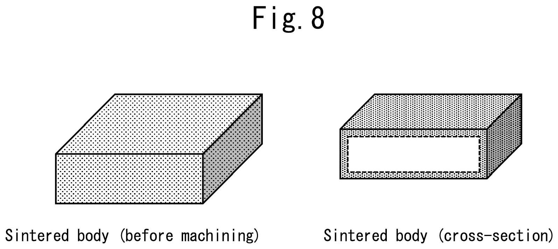

The obtained sintered body had a square surface with 121 mm sides, and a sheet form with a thickness of 25 mm. The sintered body was cut near the center of one side and a 5 mm-wide cross-section test piece was cut out. Upon visually observing the color tone of a cross-section of the sintered body, the region from the surface of the sintered body up to 6 mm in the direction perpendicular to the surface appeared as a dark gray color, while the region from the inner side up to the center was grayish white. In other words, the color tone was a two-layer structure with distinct contrast, as shown in Fig. 8.

### 2.4.2 Color tone measurement

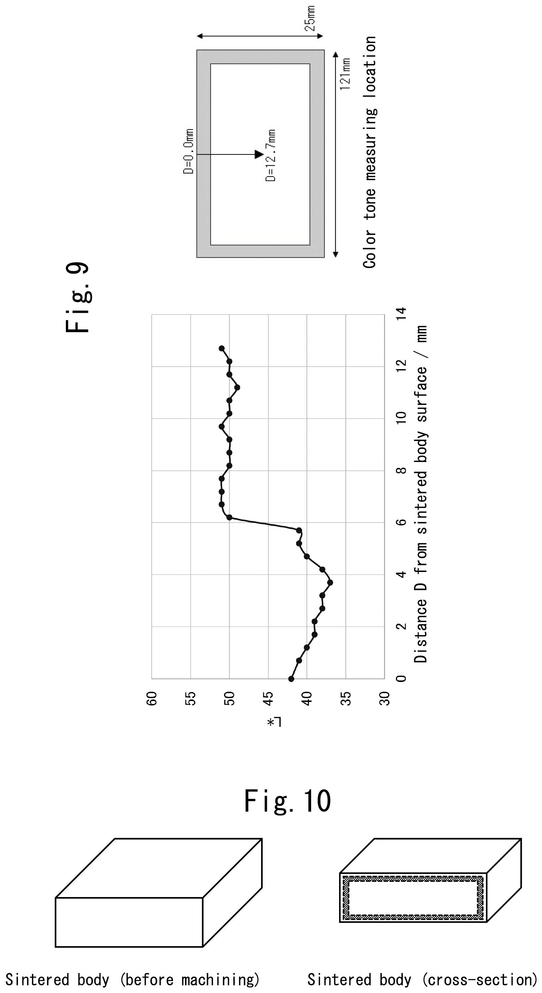

The color tone of the cross-section was measured. The colorimeter used for measurement was a C50µ by Suga Test Instruments Co., Ltd., and an L*a*b* value was calculated under conditions with illumination: 45°, bidirectional, light reception: 0°, light source: D65, measuring region: φ0.2 mm. With depth from the surface as D mm, the color tone was measured using first D = 0 (sintered surface), followed by measurement at location D = 0.7 mm, and subsequently followed by measurement to the thickness center while increasing the depth in 0.5 mm increments. The measurement results are shown in Fig. 9.

As shown in Fig. 9, an L* value on the surface (the sintered surface of the sintered body) was 42, an L* value was in the range of 37 to 42 up to location D = 5.7 mm in the depthwise direction, an L* value increasing to 51 between D = 5.7 mm and D = 6.2 mm, and an L* value being within the range of 49 to 51 up to location D = 12.7 mm at the center section in the depthwise direction. As shown in Fig. 9, the sintered body of the Example 2 contained parts in the cross-section where, when the brightness was measured from the surface of the sintered body toward the interior, two or more uniform brightness regions were observed where the brightness difference was less than 5 as an L* value and the widths were 2 mm or greater. The sintered body of Example 2 also contained a part in the cross-section where, when the brightness was measured from the surface of the sintered body toward the centroid of the cross-section, two or more uniform brightness regions were observed where the brightness difference was less than 5 as an L* value and the widths were 2 mm or greater. The width of the uniform brightness region was 5.7 mm or greater and less than 6.2 mm in the phase near the surface (dark gray phase), and 12.6 mm or greater and less than 13.6 mm in the phase on the inner side (grayish white phase).

### 2.4.3 Crystal phase and density analysis

When the crystal phase on the unmachined surface of the sintered body was analyzed by X-ray diffraction, broad reflection was confirmed indicating the presence of a glass phase, together with the two different crystal types of silicon nitride and Si₂N₂O. The sintered body was cut near the center of one side and a 5 mm-wide evaluation test piece was cut out. The crystal phase was confirmed by X-ray diffraction at the center region of the cross-section of the test piece and at a location 2 mm from the surface in the direction toward the center. Broad reflection indicating the presence of a glass phase was confirmed at all locations together with the two different crystal types of silicon nitride and Si₂N₂O. Si₂N₂O formed the grain boundary phase of the sintered body. However, no SiC peak was observed. Using a previously measured calibration curve, each of the crystals inside the sintered body was calculated to have 90.5 mass% silicon nitride, 5 mass% Si₂N₂O and 4.5 mass% glass phase as the remainder. The 1 mm-thick section of the cross-section test piece was removed by grinding from the sintered surface, and the density was measured to be 3.01 g/cm³. Since the sintered body had no water permeation, the relative density was estimated to be 93% or higher.

### 2.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 741 ppm, Fe: 304 ppm, Co: 1 ppm and Ni: 10 ppm, for a total content of 1056 ppm. These impurities are believed to have been derived mainly from the silicon nitride starting material.

### 3. Example 3

### 3.1 Kneading of starting materials

A binder and a dispersing material were added to a starting material comprising silicon oxide (2 mass%), yttrium oxide (3 mass%) and commercially available high-purity silicon nitride powder (purity: 98.96%) as the remainder, and the components were mixed using ceramic balls in a ceramic liner, with purified water as the solvent. The obtained slurry was subjected to airflow drying (by spray drying) to obtain granules.

### 3.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 3.3 Degreasing and firing

The obtained green body was degreased in an air atmosphere at 350°C and then fired in the following manner. The firing was carried out while pressurizing using nitrogen gas with a purity of 99.99% and controlling the furnace to an absolute pressure of 0.4 MPa. The maximum temperature during firing was 1830°C, the time required for temperature increase from 1700°C to 1770°C was 80 minutes and the time required for increase from 1770°C to 1830°C was 65 minutes, with each temperature increase at a fixed rate. After reaching the maximum temperature of 1830°C, the body was held for 4 hours at the maximum temperature and then cooled to obtain a sintered body for Example 3.

### 3.4 Evaluation of sintered body

### 3.4.1 Visual observation

The obtained sintered body had a square surface with 120.5 mm sides, and a sheet form with a thickness of 26.5 mm. The sintered body was cut near the center of one side and a 5 mm-wide cross-section test piece was cut out. Upon visually observing the color tone of the sintered body cross-section, the surface of the sintered body and the region up to about 0.9 mm in the direction perpendicular to the surface appeared essentially white, with a dark gray region with a thickness of about 4 mm on the inner side, and a grayish white color from the inner side toward the center. In other words, the color tone was a three-layer structure with distinct contrast as shown in Fig. 10.

### 3.4.2 Color tone measurement

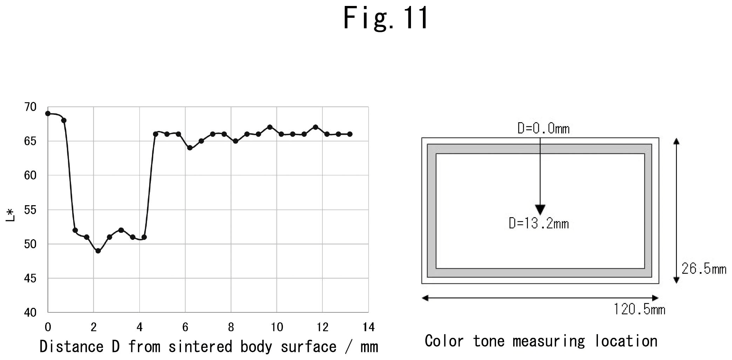

The color tone of the cross-section was measured. The colorimeter used for measurement was a C50µ by Suga Test Instruments Co., Ltd., and an L*a*b* value was calculated under conditions with illumination: 45°, bidirectional, light reception: 0°, light source: D65, measuring region: φ0.2 mm. With depth from the surface as D mm, the color tone was measured using first D = 0 (sintered surface), followed by measurement at location D = 0.7 mm, and subsequently followed by measurement to the thickness center while increasing the depth in 0.5 mm increments. The measurement results are shown in Fig. 11.

As shown in Fig. 11, an L* value on the surface (sintered body surface) was 69, with an L* value being a high value of 68 even at the next measurement point (D = 0.7 mm). An L* value fell to 52 between D = 0.7 mm and D = 1.2 mm, an L* value was then in the range of 49 to 52 up to location D = 4.2 mm in the depthwise direction, an L* value increased to 66 between D = 4.2 mm and D = 4.7 mm, and an L* value was in the range of 64 to 67 up to location D = 13.2 mm at the center section in the depthwise direction. As shown in Fig. 11, the sintered body of the Example 3 contained parts in the cross-section where, when the brightness was measured from the surface of the sintered body toward the interior, two or more uniform brightness regions were observed where the brightness difference was less than 5 as an L* value and the widths were 2 mm or greater. The sintered body of Example 3 also contained a part in the cross-section where, when the brightness was measured from the surface of the sintered body toward the centroid of the cross-section, two or more uniform brightness regions were observed where the brightness difference was less than 5 as an L* value and the widths were 2 mm or greater. The width of the uniform brightness region was 0.7 mm or greater and less than 1.2 mm in the phase on the outermost surface side (white phase), 4 mm or greater and less than 5 mm in the phase near the surface (dark gray phase), and 17.1 mm or greater and less than 18.1 mm in the phase on the inner side (grayish white phase).

### 3.4.3 Crystal phase and density analysis

When the crystal phase on the unmachined surface of the sintered body was analyzed by X-ray diffraction, two different crystals were confirmed, which were silicon nitride and Y₂Si₃O₃N₄. Y₂Si₃O₃N₄ is a crystal produced by sublimation decomposition between silicon nitride and the grain boundary phase, and it is characterized by having a high L* value. The crystal phase was confirmed by X-ray diffraction at the center region of the cross-section of the test piece and at a location 2 mm from the surface in the direction toward the center. At all locations, three different crystals were confirmed for silicon nitride, Si₂N₂O and Y₂Si₂O₇. Y₂Si₃O₃N₄, Si₂N₂O and Y₂Si₂O₇ constituted the grain boundary phase of the sintered body. On the other hand, no broad reflection was observed that would have indicated a SiC peak or glass phase. Calculation for each of the crystals inside the sintered body from a previously measured calibration curve resulted in 94.7 mass% for silicon nitride, 0.8 mass% for Si₂N₂O and 4.5 mass% for Y₂Si₂O₇. The theoretical density of the crystals was calculated from the aforementioned composition to be 3.21 g/cm³. The 2 mm-thick section of the cross-section test piece was removed by grinding from the sintered surface, and the density was measured to be 3.11 g/cm³. The relative density of the sintered body was calculated to be 97%.

### 3.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 10 ppm, Fe: 25 ppm, Co: <0.1 ppm and Ni: 2 ppm, for a total content of about 37 ppm.

### 4. Example 4

### 4.1 Machining of sintered body

After sampling a 5 mm cross-section test piece in Example 2, a 121 mm × 57 mm × 25 mm thick sintered body was machined, forming regions with color tone brightness differences on the machined surface. The machining method was as follows.

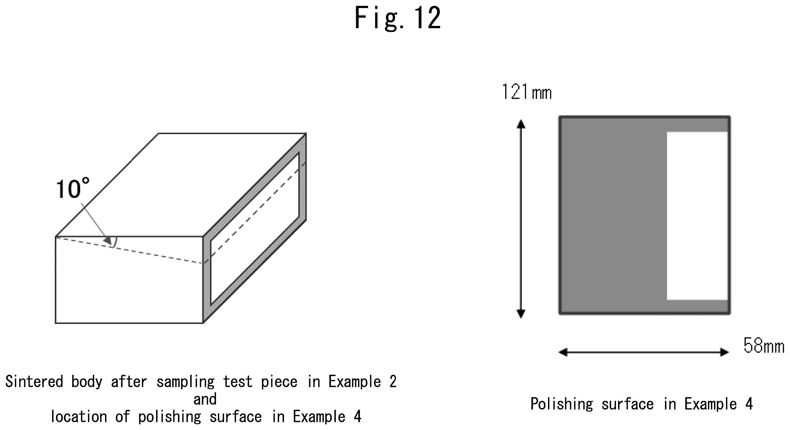

First the 121 mm × 57 mm side was polished. As shown in Fig. 12, polishing was in a manner so that upon completion, the normal to the machining surface was inclined 10° with respect to the direction perpendicular to the lengthwise direction on the original surface. Specifically, the polishing degree on one 121 mm side was high and the polishing degree on the other side was low. Machining by this method was complete when the entire 121 mm × 57 mm sintered surface of the sintered body was fully polished. The polishing degree was 10.1 mm for one 121 mm side and 0.1 mm for the other. The dimensions of the completely polished surface were 121 mm × 58 mm.

### 4.2 Visual observation

Upon visually observing the color tone of the obtained polished surface, the region up to about 35 mm from the side with a low polishing degree toward the side with a high polishing degree appeared dark gray, and from that side toward the side with an even higher polishing degree, the region at the center with a width of approximately 109 mm exhibited a grayish white color. The color tone was a two-layer structure with distinct contrast, as shown in Fig. 12. The boundary of the two-layer color tone was parallel or perpendicular to the 121 mm sides, with the dark gray region distributed in the form of a "C" shape.

### 4.3 Color tone measurement

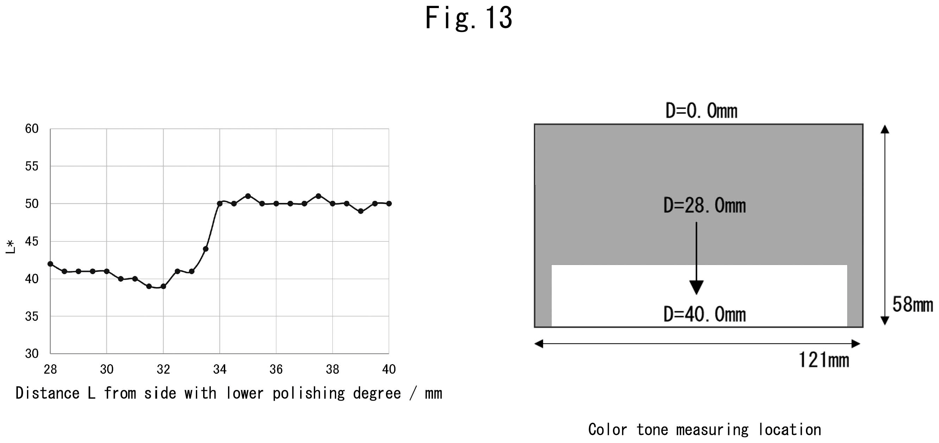

The color tone of the cross-section was measured. The colorimeter used for measurement was a C50µ by Suga Test Instruments Co., Ltd., and an L*a*b* value was calculated under conditions with illumination: 45°, bidirectional, light reception: 0°, light source: D65, measuring region: φ0.2 mm. Using D mm as the distance from the center on the 121 mm side on the low polishing degree side, the color tone was measured by first measuring at D = 28 mm, and then successively measuring perpendicular to the 121 mm side through changing color tone points, while increasing the distance 0.5 mm each time up to D = 40 mm. The measurement results are shown in Fig. 13.

As shown in Fig. 13, an L* value on the low polishing degree side was in the range of 39 to 42, and an L* value on the high polishing degree side on the center section of the polishing surface was in the range of 49 to 51. The measurement point at D = 33.5 mm corresponded to the color tone transition region, and an L* value at that measurement point was 44. The width of the transition region was less than 1 mm.

### 5. Comparative Example 1

### 5.1 Kneading of starting materials

A binder and a dispersing material were added to a starting material comprising silicon oxide (1 mass%), aluminum oxide (12 mass%), aluminum nitride (5 mass%) and commercially available silicon nitride powder (purity: 98.13%) as the remainder, and the components were mixed using ceramic balls in a ceramic liner, with purified water as the solvent. The obtained slurry was subjected to airflow drying (by spray drying) to obtain granules.

### 5.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 5.3 Degreasing and firing

The obtained green body was degreased in an air atmosphere at 350°C and then fired in the following manner. The firing was carried out while pressurizing using nitrogen gas with a purity of 99.99% and controlling the furnace to an absolute pressure of 0.7 MPa. The maximum temperature during firing was 1800°C, the time required for temperature increase from 1700°C to 1770°C was 100 minutes and the time required for increase from 1770°C to 1800°C was 50 minutes, with each temperature increase at a fixed rate. After reaching the maximum temperature of 1800°C, the body was held for 4 hours at the maximum temperature and then cooled to obtain a sintered body for Comparative Example 1.

### 5.4 Evaluation of sintered body

### 5.4.1 Visual observation

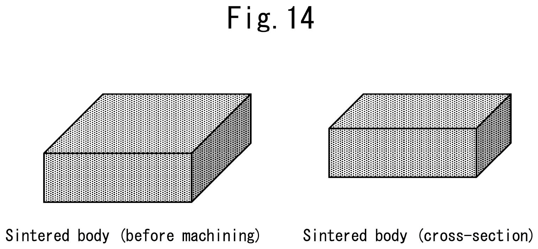

The obtained sintered body had a square surface with 121 mm sides, and a sheet form with a thickness of 25 mm. The sintered body was cut near the center of one side and a 5 mm-wide cross-section test piece was cut out. Upon visually observing the color tone of the cross-section of the sintered body, it was found to be an essentially uniform dark gray color from the surface to the interior of the sintered body. That is, as shown in Fig. 14, no distinct contrast or locationdependent color differences were observed.

### 5.4.2 Color tone measurement

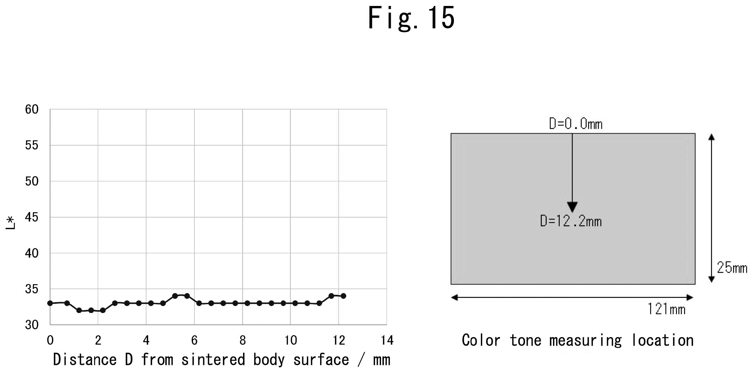

The color tone of the cross-section was measured. The colorimeter used for measurement was a C50µ by Suga Test Instruments Co., Ltd., and an L*a*b* value was calculated under conditions with illumination: 45°, bidirectional, light reception: 0°, light source: D65, measuring region: φ0.2 mm. With depth from the surface as D mm, the color tone was measured using first D = 0 (sintered surface), followed by measurement at location D = 0.7 mm, and subsequently followed by measurement to the thickness center while increasing the depth in 0.5 mm increments. The measurement results are shown in Fig. 15.

As shown in Fig. 15, an L* value was in the range of 32 to 35 from the surface (sintered surface) toward the interior, and although an L* value tended to increase slightly toward the interior, the brightness was uniform and low.

### 5.4.3 Crystal phase and density analysis

When the crystal phase on the unmachined surface of the sintered body was analyzed by X-ray diffraction, a broad peak was confirmed indicating the presence of silicon nitride and a slight glass phase. However, no SiC peak was observed. The crystal phase was confirmed by X-ray diffraction at the center region of the cross-section of the test piece and at a location 2 mm from the surface in the direction toward the center. At all locations, only broad reflection was confirmed, indicating the presence of silicon nitride and a slight glass phase. Calculation for the crystals inside the sintered body from a previously measured calibration curve resulted in 98.5 mass% for silicon nitride and 1.5 mass% for the glass phase. The density of the sintered body was measured to be 3.00 g/cm³. Since the water absorption percentage of the sintered body was zero, the relative density was estimated to have reached 94% or greater.

### 5.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 6614 ppm, Fe: 367 ppm, Co: <2 ppm and Ni: 15 ppm, for a total content of about 6998 ppm. Most of the Al was derived from secondary starting materials, while the other elements are thought to be derived from impurities in the silicon nitride starting material.

### 6. Comparative Example 2

### 6.1 Kneading of starting materials

A binder and a dispersing material were added to a starting material comprising silicon oxide (5 mass%), magnesium oxide (3 mass%), yttrium oxide (1 mass%) and commercially available high-purity silicon nitride powder (purity: 98.96%) as the remainder, and the components were mixed using ceramic balls in a ceramic liner, with purified water as the solvent. The obtained slurry was subjected to airflow drying (by spray drying) to obtain granules.

### 6.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 6.3 Degreasing and firing

The obtained green body was degreased in an air atmosphere at 350°C and then fired in the following manner. The firing was carried out by flowing nitrogen gas with a purity of 99.99% into the furnace, at atmospheric pressure without pressurization inside the furnace. After reaching the maximum temperature of 1650°C during firing, the body was held for 4 hours at the maximum temperature and then cooled to obtain a sintered body for Comparative Example 2.

### 6.4 Evaluation of sintered body

### 6.4.1 Visual observation

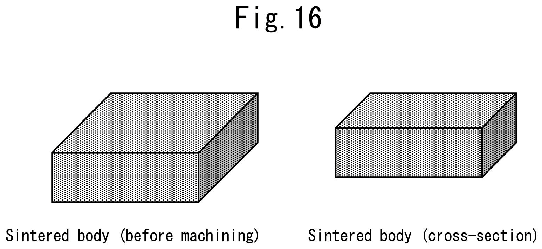

The obtained sintered body had a square surface with 120.5 mm sides, and a sheet form with a thickness of 25 mm. The sintered body was cut near the center of one side and a 5 mm-wide cross-section test piece was cut out. Upon visually observing the color tone of the cross-section of the sintered body, it was found to have a dark gray color overall from the surface to the interior of the sintered body. That is, as shown in Fig. 16, no distinct contrast or locationdependent color differences were observed. However, while there was no distinct contrast, a gentle gradation was confirmed near the surface with darker color toward the surface side.

### 6.4.2 Color tone measurement

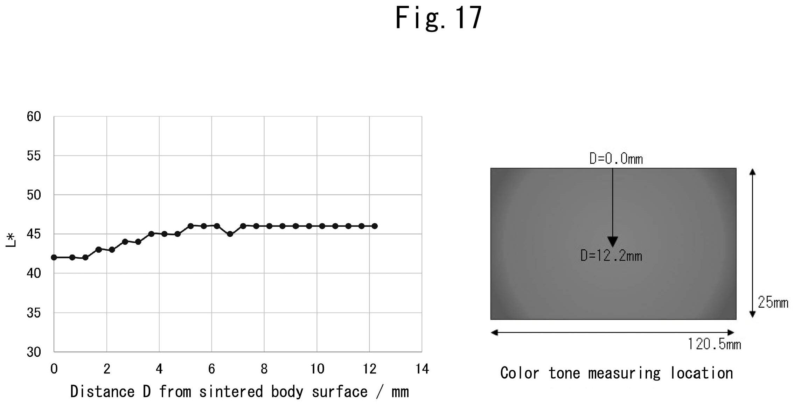

The color tone of the cross-section was measured. The colorimeter used for measurement was a C50µ by Suga Test Instruments Co., Ltd., and an L*a*b* value was calculated under conditions with illumination: 45°, bidirectional, light reception: 0°, light source: D65, measuring region: φ0.2 mm. With depth from the surface as D mm, the color tone was measured using first D = 0 (sintered surface), followed by measurement at location D = 0.7 mm, and subsequently followed by measurement to the thickness center while increasing the depth in 0.5 mm increments. The measurement results are shown in Fig. 17.

As shown in Fig. 17, an L* value gently increased from 42 to 46 from the surface (sintered surface) toward location D = 5.2 mm. Up to the center section, an L* value was in the range of 45 to 46. That is, an L* value was in the range of 42 to 46 from the surface toward the interior, with no drastic change in color tone visible.

### 6.4.3 Crystal phase and density analysis

When the crystal phase on the unmachined surface of the sintered body was analyzed by X-ray diffraction, a broad peak was confirmed indicating the presence of silicon nitride and a glass phase. However, no SiC peak was observed. The crystal phase was confirmed by X-ray diffraction at the center region of the cross-section of the test piece and at a location 2 mm from the surface in the direction toward the center. At all locations, only broad reflection was confirmed, indicating the presence of silicon nitride and a glass phase.

### 6.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 189 ppm, Fe: 167 ppm, Co: 1 ppm and Ni: 11 ppm, for a total content of 368 ppm.

### 7. Summary

Table 1 shows the results for each of Examples 1 to 3 and Comparative Examples 1 and 2.

**[Table 1]**

| | Example 1 | Example 2 | Example 3 | Comp. Example 1 | Comp. Example 2 |
|---|---|---|---|---|---|
| A Maximum color tone L* | 48 | 51 | 69 | 34 | 46 |
| B Minimum color tone L* | 40 | 37 | 49 | 32 | 42 |
| A-B | 8 | 14 | 20 | 2 | 4 |
| Maximum change in L* between 1 mm measurement points | 7 | 10 | 17 | 1 | 1 |
| Maximum change in L* between 0.5 mm measurement points | 7 | 9 | 16 | 1 | 1 |
| Al, Fe, CO and Ni, total concentration | 1103 ppm | 1056 ppm | 37 ppm | 6998 ppm | 368 ppm |
| SiC concentration | 2000 ppm | Not detected | Not detected | Not detected | Not detected |
| Grain boundary phase | Yb₂Si₃O₃N₄ or Si₂N₂O and Yb₂Si₂O₇ | Si₂N₂O Glass phase | Y₂Si₃O₃N₄ or Si₂N₂O and Y₂Si₂O₇ | Glass phase | Glass phase |

### REFERENCE SIGNS LIST

1 Silicon nitride powder
2 Secondary starting powder
3 Granules
4 Molded body
5 Unfired body
10 Silicon nitride sintered body
11 First section
12 Second section

## Claims

1. A silicon nitride sintered body,
having multiple crystal grains and a grain boundary phase that bonds the crystal grains together, and
having a brightness difference of 5 or greater as an L* value.

2. The silicon nitride sintered body according to claim 1,
having a brightness difference of 10 or greater as an L* value.

3. The silicon nitride sintered body according to claim 1 or 2, wherein
the brightness difference is on the surface of the sintered body.

4. The silicon nitride sintered body according to any one of claims 1 to 3, wherein
the brightness difference is in a cross-section perpendicular to the surface of the sintered body.

5. The silicon nitride sintered body according to claim 4, wherein
the brightness difference is in a range of 1.0 mm or less in the direction perpendicular to the surface of the sintered body in a cross-section perpendicular to the surface.

6. The silicon nitride sintered body according to claim 4, wherein
the brightness difference is in a range of 0.5 mm or less in the direction perpendicular to the surface of the sintered body in a cross-section perpendicular to the surface.

7. The silicon nitride sintered body according to any one of claims 1 to 6, wherein
the cross-section of the sintered body contains a section where, when the brightness is measured from the surface of the sintered body toward the interior, two or more uniform brightness regions are observed where the brightness difference is less than 5 as an L* value and the width is 2 mm or greater.

8. The silicon nitride sintered body according to any one of claims 1 to 7,
having a section with an L* value of 55 or greater.

9. The silicon nitride sintered body according to any one of claims 1 to 8, wherein
the total content of Al, Fe, Co and Ni is less than 2000 ppm and
the SiC content is less than 5000 ppm.

10. The silicon nitride sintered body according to any one of claims 1 to 9, wherein
the Al content is less than 1000 ppm.

11. The silicon nitride sintered body according to any one of claims 1 to 10, wherein
the grain boundary phase contains a crystalline component.

12. The silicon nitride sintered body according to claim 11, wherein
the grain boundary phase contains, as the crystalline component, one or more selected from the group consisting of Si₂N₂O, Y₂Si₂O₇, Yb₂Si₂O₇, Y₂Si₃O₃N₄ and YbSi₃O₃N₄.

13. A method for producing the silicon nitride sintered body according to any one of claims 1 to 12, the method comprising:
kneading a silicon nitride powder and a secondary starting powder to obtain granules, and
molding and firing the granules,
wherein
the maximum temperature during firing is higher than 1770°C,
the atmosphere at 1700°C or higher during temperature increase in the firing period comprises nitrogen gas at 99.9 vol% or greater and has an absolute pressure of 0.3 MPa or higher and lower than 1.1 MPa,
the time required for temperature increase from 1700°C to 1770°C during the firing period is 40 to 120 minutes,
the time required for temperature increase from 1770°C to the maximum temperature during the firing period is 30 to 90 minutes, and
the holding time at the maximum temperature during the firing period is 16 hours or less.
